# EUROPEAN PATENT APPLICATION

(11) **EP 2 592 825 A2**
(43) Date of publication of application: **15.05.2013**
(21) Application number: 12190310.8
(22) Date of filing: 29.10.2012
(51) Int. Cl.: H04N 5/369, H04N 5/3745

(54) **Solid-state imaging apparatus**

(30) Priority: 09.11.2011 JP 2011245716
(71) Applicant: Canon Kabushiki Kaisha, Tokyo 146-8501 (JP)
(72) Inventor: Arishima, Yu, Tokyo, Tokyo 146-8501 (JP); Okita, Akira, Tokyo, Tokyo 146-8501 (JP)
(74) Representative: TBK

(57) **Abstract**

A solid-state imaging apparatus has a plurality of pixels and an amplifying unit (300) for amplifying signals of the plurality of pixels. The plurality of pixels have imaging pixels and focus detecting pixels. The amplifying unit amplifies the signals of the imaging pixels at a first gain and amplifies the signals of the focus detecting pixels at a second gain different from the first gain.

## Description

### BACKGROUND OF THE INVENTION

### Field of the Invention

The present invention relates to a solid-state imaging apparatus.

### Description of the Related Art

A solid-state imaging apparatus of a CCD type or a CMOS type has been used in many digital still cameras or digital camcorders. In recent years, even in a digital single-lens (reflex) camera, it is demanded to improve performance of moving image photographing functions. Among them, particularly, an auto-focus (AF) function is an important item. Such a technique that a structure of a part of pixels for performing an image pickup operation is designed as pixels only for use of the AF function, thereby individually receiving light which enters an imaging surface from the right direction and light which enters from the left direction has been known. Such a technique is a system for performing a "phase-difference type AF" by measuring a deviation amount between a signal derived from the right and a signal derived from the left.

The Official Gazette of Japanese Patent Application Laid-Open No. 2010-14788 (hereinbelow, Patent Literature 1) discloses such an algorithm that the auto focus of the phase-difference system is performed on the basis of signal outputs of the AF pixels arranged in a solid-state imaging element.

In a read out mode disclosed in Patent Literature 1, when a signal from an imaging pixel is read out, a signal from a focus detecting pixel is simultaneously read out. According to such a construction, since an aperture ratio of the focus detecting pixel is smaller than those of other imaging pixels, if the signal from the focus detecting pixel is read out by a same read out circuit, its signal output decreases. Ordinarily, since a person who operates a camera decides arbitrarily an exposing time, a sensitivity setting, and the like serving as photographing conditions at the time of photographing an image, there is also a case where optimum conditions for a focus detection are not settled. In such a case, there occurs such a problem that in order to read out the signal from the focus detecting pixel in an image with a small contrast, it is difficult to obtain an enough high S/N ratio. In order to amplify the signal from the focus detecting pixel, there is also a method whereby after the signal from the focus detecting pixel was output from a solid-state imaging apparatus, it is amplified by a processor for image processing or software. However, in such a case, it is also difficult to obtain an S/N ratio which is equal to or larger than a value decided by the solid-state imaging apparatus. It is a well-known fact that in order to improve the S/N ratio of the photographed image, it is effective to improve an S/N ratio of the signal which is output from the solid-state imaging apparatus.

There is a case where in order to improve the sensitivity of the focus detecting pixel, a color filter is not arranged on the focus detecting pixel but the focus detecting pixel is covered with only a transparent resin. By this method, the sensitivity of the focus detecting pixel can be increased to a value which is 2 or 3 times as large as that in the case where the focus detecting pixel has the color filter. However, in such a case, there is a case where since the sensitivity is excessively increased, if a strong photosignal entered, a photodiode for a photoelectric conversion is saturated. There is not such a guarantee that the signal is not saturated under the photographing conditions decided by the person who operates the camera as mentioned above. Consequently, such a problem that the conditions suitable to read out the signal of the focus detecting pixel can be set without being influenced by the photographing conditions is a problem which is important to the AF technique using the signal on the imaging surface.

It is an object of the invention to provide a solid-state imaging apparatus which has imaging pixels and focus detecting pixels and can obtain a signal of a high S/N ratio.

### SUMMARY OF THE INVENTION

According to one aspect of the present invention, a solid-state imaging apparatus comprising: a plurality of pixels; and an amplifying unit for amplifying a signal from of the plurality of pixels, wherein the plurality of pixels include an imaging pixel and a focus detecting pixel, and the amplifying unit amplifies at a first gain a signal from the imaging pixel, and amplifies a signal from the focus detecting pixel at a second gain different from the first gain.

Further features of the present invention will become apparent from the following description of exemplary embodiments with reference to the attached drawings.

### BRIEF DESCRIPTION OF THE DRAWINGS

FIG. 1 is a circuit diagram of a pixel unit of a solid-state imaging apparatus in the first embodiment.

FIG. 2 is a diagram illustrating a read out circuit of a pixel signal of the solid-state imaging apparatus in the first embodiment.

FIG. 3 is a circuit layout diagram of the solid-state imaging apparatus in the first embodiment.

FIG. 4 is a diagram illustrating an example of a pixel layout of a region 201 in FIG. 3.

FIG. 5 is a diagram illustrating a read out circuit of a column including focus detecting pixels in FIG. 4.

FIG. 6 is a diagram illustrating a read out circuit of a column having only imaging pixels in FIG. 4.

FIG. 7 is a diagram illustrating a waveform of an output signal of the read out circuit in the first embodiment.

FIG. 8 is a driving timing chart of the read out circuit in the first embodiment.

FIG. 9 is a diagram illustrating a read out circuit of a column having only the imaging pixels.

FIG. 10 is a driving timing chart of a read out circuit in the second embodiment.

FIG. 11 is a diagram illustrating a read out circuit in the third embodiment.

FIG. 12 is a circuit diagram of a pixel unit in the fourth embodiment.

FIG. 13 is a circuit diagram of a pixel unit in the fifth embodiment.

FIG. 14 is a circuit diagram of a pixel unit in the sixth embodiment.

FIG. 15 is a circuit diagram of a pixel unit in the seventh embodiment.

FIG. 16 is a constructional diagram of a read out circuit in the eighth embodiment.

FIG. 17 is a driving timing chart of a counter circuit in the eighth embodiment.

### DESCRIPTION OF THE EMBODIMENTS

(First Embodiment)

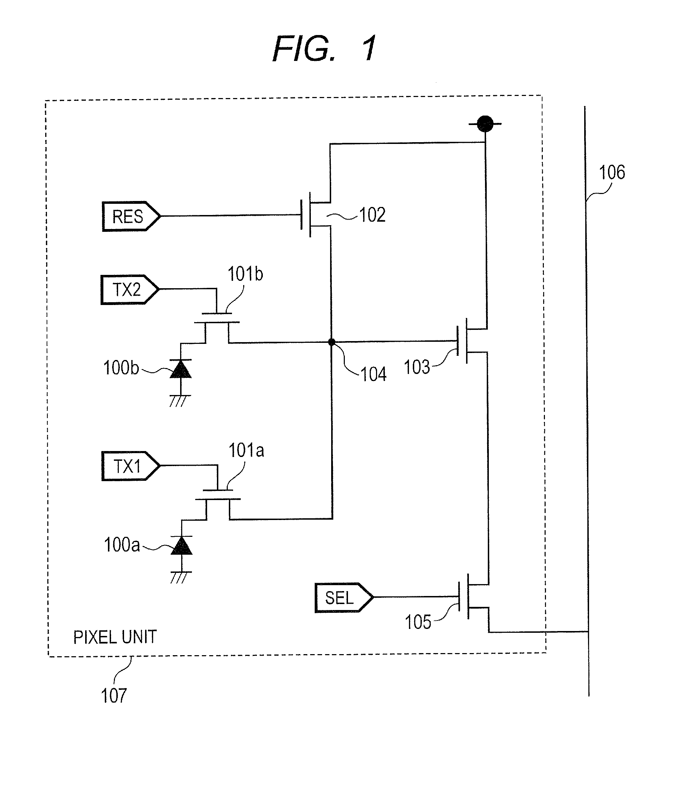

FIG. 1 is a circuit diagram illustrating an example of a pixel unit 107 of a solid-state imaging apparatus of the first embodiment. A case where a signal electric charge is an electron will be described hereinbelow. In the embodiment, a shared pixel in which a part of transistors are shared by a plurality of pixels in order to improve an aperture ratio of the pixel will now be described as an example. In FIG. 1, the pixel unit 107 has two pixels and includes two photodiodes 100a and 100b serving as photoelectric conversion elements and two transfer MOS transistors 101a and 101b. The pixel unit 107 has a resetting MOS transistor 102, an amplifying MOS transistor 103, and a selecting MOS transistor 105. In other words, the two pixels, that is, the two photodiodes 100a and 100b share the resetting MOS transistor 102, the amplifying MOS transistor 103, and the selecting MOS transistor 105. The plurality of photodiodes (pixels) 100a and 100b generate signals by a photoelectric conversion. The transfer MOS transistors 101a and 101b transfer the signal electric charges generated in the photoelectric conversion elements 100a and 100b to a floating diffusion region 104, respectively. The floating diffusion region 104 converts the electric charges generated by the photoelectric conversion of the photoelectric conversion elements 100a and 100b into voltages. The amplifying MOS transistor 103 transmits an output corresponding to the voltage of the floating diffusion region 104 to a vertical output line 106 through the selecting MOS transistor 105. The amplifying MOS transistor 103 is a part of a source-follower circuit and its gate electrode is electrically connected to the floating diffusion region 104. The resetting MOS transistor 102 resets a node of the gate electrode of the amplifying MOS transistor 103, that is, the floating diffusion region 104 to a specified electric potential (resetting potential). A transfer control signal TX1 is supplied to a gate of the transfer MOS transistor 101a. A transfer control signal TX2 is supplied to a gate of the transfer MOS transistor 101b. A resetting control signal RES is supplied to a gate of the resetting MOS transistor 102. A selecting control signal SEL is supplied to a gate of the selecting MOS transistor 105. A read out of the foregoing signal electric charges and a read out of the signal based on the signal electric charges are controlled by the above control signals. The solid-state imaging apparatus has an imaging region constructed by the plurality of pixel units 107 arranged in a one-dimensional or two-dimensional matrix shape. The pixel unit 107 may have two or more pixels and an arbitrary transistor configuration can be applied thereto.

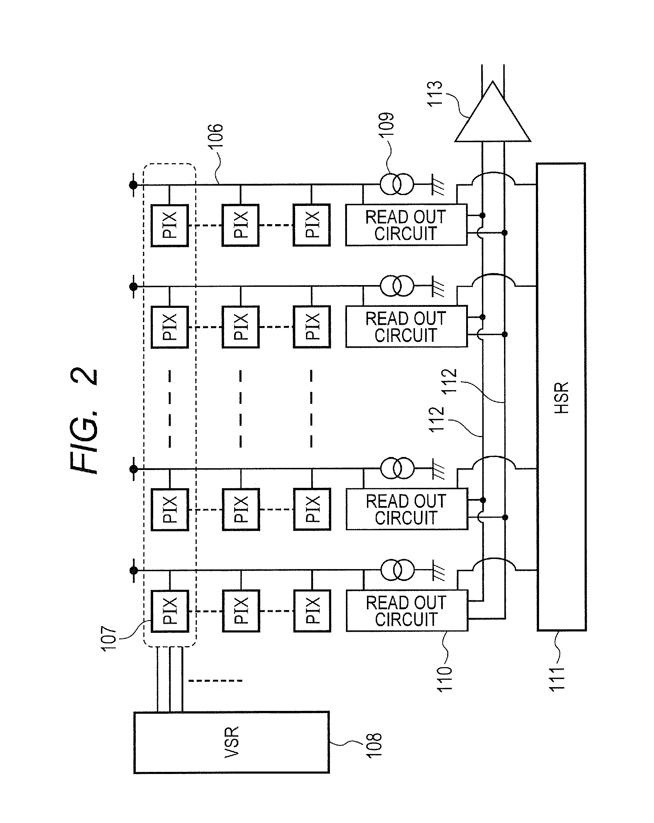

FIG. 2 is a diagram illustrating an example of a construction of the solid-state imaging apparatus having the plurality of pixel units 107 in FIG. 1. In FIG. 1, the signals TX1, TX2, RES, and SEL for driving the pixel units 107 are controlled by a vertical scanning circuit 108 in FIG. 2. The vertical scanning circuit 108 scans the pixels every row or every plural rows and transfers the signals of the pixel units 107 to the vertical output line 106. A current source 109 is electrically connected to the vertical output line 106. The plurality of pixel units 107 can be arranged in a two-dimensional matrix shape. A plurality of read out circuit 110 are arranged every column of the plurality of pixel units 107. The signals transferred from the pixel units 107 to the vertical output line 106 of each column are read out by the read out circuits 110 arranged to each column. After that, the signals of the read out circuits 110 are sequentially transferred from each column to horizontal transfer lines 112 by a horizontal scanning circuit 111. The signals amplified by an output amplifier 113 are output from the solid-state imaging apparatus.

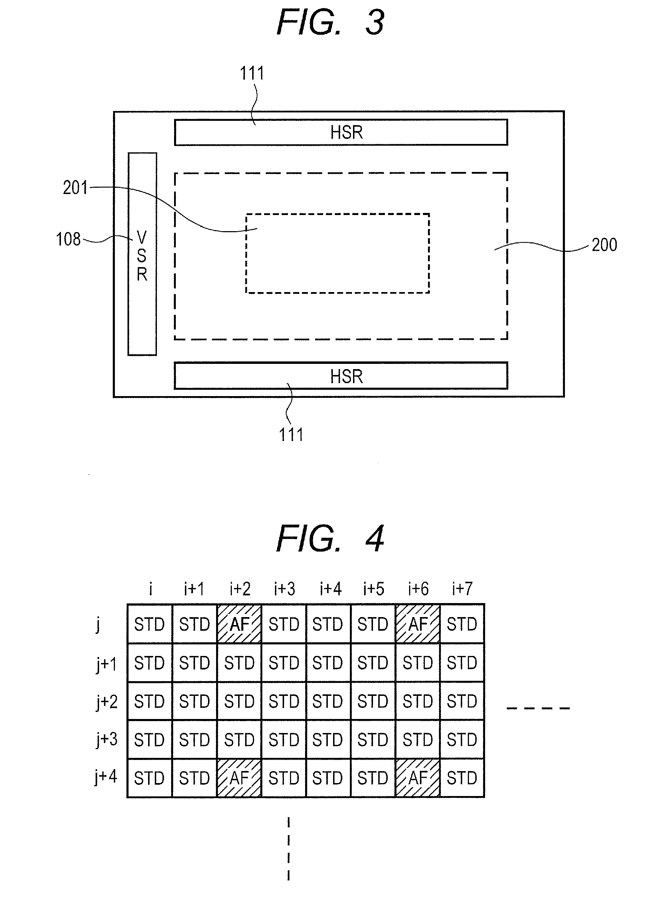

FIG. 3 is a circuit layout diagram of the solid-state imaging apparatus of the embodiment. Besides a two-dimensional pixel array 200, the vertical scanning circuit 108, the horizontal scanning circuit 111, and other peripheral circuits are arranged in the solid-state imaging apparatus. The pixel array 200 has the plurality of pixel units 107 in FIG. 2. Focus detecting pixels are arranged in a region of a center portion 201 of the pixel array 200.

FIG. 4 is an enlarged diagram of the region 201 in FIG. 3 and is a diagram illustrating a layout of the imaging pixels and the focus detecting pixels. The pixels are illustrated in the jth row to the (j+4)th row in the row direction. The pixels are illustrated in the ith column to the (i+7)th column in the column direction. "STD" indicates an imaging pixel. "AF" indicates an AF pixel (focus detecting pixel). The focus detecting pixels are arranged at predetermined positions. In this example, the pixels are arranged in the region 201 at a period of four rows and four columns. In the embodiment, the different read out circuits can be arranged in the column where the pixels including the focus detecting pixels are arranged and in the column where only the imaging pixels are arranged. The positions where the focus detecting pixels are arranged can be decided at the time of design. The read out circuits illustrated here can correspond to the read out circuits 110 in FIG. 2.

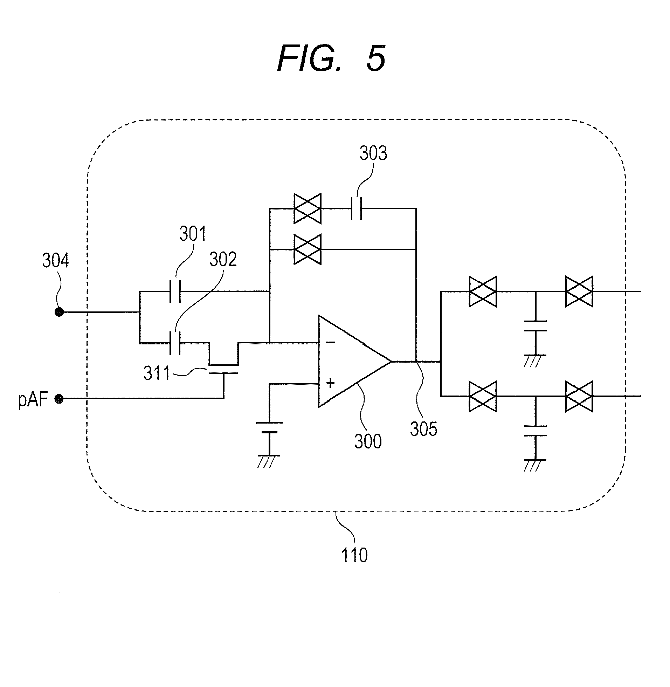

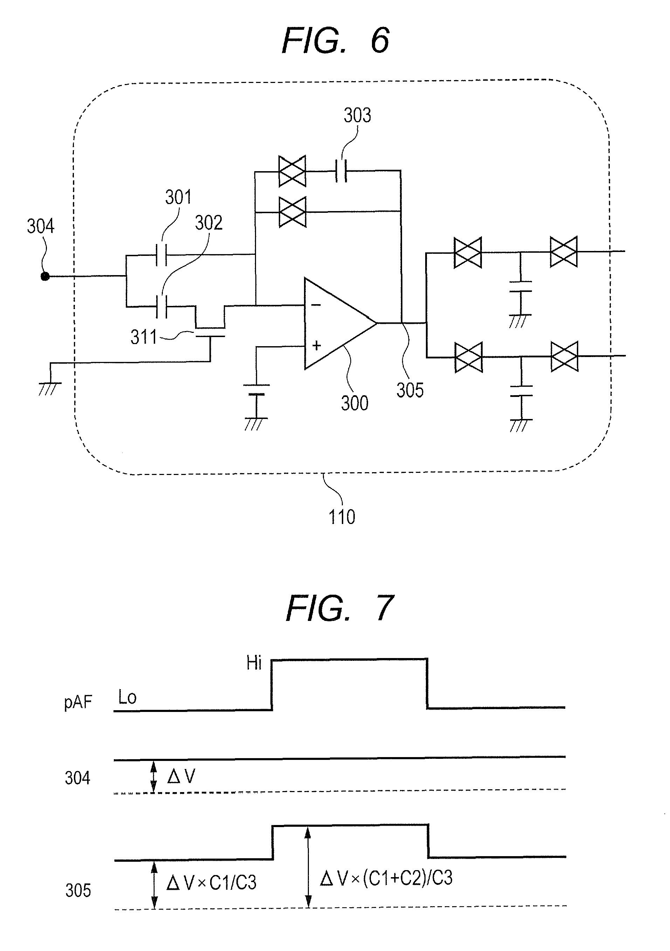

FIG. 5 is a diagram illustrating a circuit which can correspond to the read out circuit 110 of the column including the focus detecting pixels in FIG. 4. FIG. 6 is a diagram illustrating a circuit which can correspond to the read out circuit 110 of the column having only the imaging pixels in FIG. 4. A column amplifier 300 can be arranged every column. An input terminal 304 of the read out circuit 110, input capacitors 301 and 302, a feedback capacitor 303, and an output terminal 305 of the column amplifier 300 are provided. In FIG. 5, a gate of a MOS transistor 311 is connected to a terminal pAF. In FIG. 6, the MOS transistor 311 is OFF. For example, a grounding potential can be supplied to the gate of the MOS transistor 311. It is now assumed that a capacitance value of the input capacitor 301 is equal to C1, a capacitance value of the input capacitor 302 is equal to C2, and a capacitance value of the feedback capacitor 303 is equal to C3, respectively. In a construction of FIG. 6, when a signal of an amplitude ΔV is input to the input terminal 304, an amplitude of an output signal at the output terminal 305 is equal to ΔV × C1/C3. That is, the column amplifier (amplifying unit) 300 amplifies the signal of the imaging pixel at a first gain C1/C3.

FIG. 7 is a diagram illustrating the operation of the read out circuit 110 in FIG. 5 which is used in the column including the focus detecting pixels. The read out circuits 110 in FIGS. 5 and 6 can operate at the same timing. At the timing for reading out the signal of a row including the focus detecting pixels, a high-level signal is input to the terminal pAF of the read out circuit 110. In the read out circuit 110 in FIG. 6, since the MOS transistor 311 is OFF, the signal is multiplied by (C1/C3) times irrespective of a signal level of the terminal pAF. In the circuit in FIG. 5, on the other hand, when the high-level signal is input to the terminal pAF, the amplitude of the signal at the output terminal 305 is equal to ΔV × (C1 + C2)/C3. That is, the column amplifier (amplifying unit) 300 amplifies the signal of the focus detecting pixel at a second gain of (C1 + C2)/C3. In the circuit in FIG. 5, when a low-level signal is input to the terminal pAF, the amplitude of the signal at the output terminal 305 is equal to ΔV × C1/C3. That is, the column amplifier (amplifying unit) 300 amplifies the signal of the imaging pixel at the first gain of (C1/C3). The second gain differs from the first gain. The second gain can be set so as to be larger than the first gain. When the amplitude of the signal of the focus detecting pixel is larger, the second gain can be set so as to be smaller than the first gain.

As mentioned above, the gain of the column in which only the imaging pixels are arranged and the gain of the column in which the focus detecting pixels are arranged can be changed by the control of the signal which is input to the terminal pAF. In the embodiment, the second gain of the signal from the focus detecting pixel is larger than the first gain of the signal from the imaging pixel. Such a driving that the signal which is input to the terminal pAF of the read out circuit 110 is set to the high level with respect to only the column in which the focus detecting pixels exist can be also realized by the following construction of the counter circuit. For example, a case where the focus detecting pixels are arranged in the region 201 in FIG. 3 at the same period (4 rows × 4 columns) as that of FIG. 4 will now be described. It is assumed that the read out circuits 110 in FIG. 6 are arranged at the (i+2)th column and the (i+6)th column in the row where the focus detecting pixels exist.

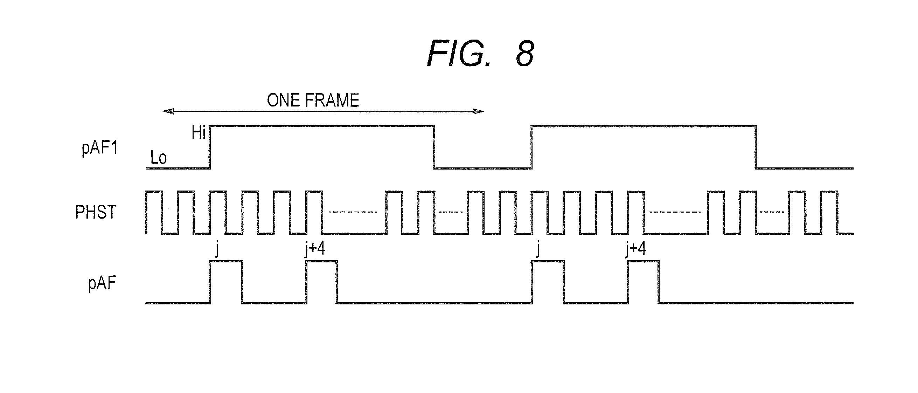

FIG. 8 is a driving timing chart at the time when the signal of the terminal pAF is output from the counter circuit. An external signal pAF1 is an external input pulse which is set to the high level only for a period of time during which the vertical scanning circuit 108 is scanning the region 201 including the focus detecting pixels. A signal PHST is a start pulse of the horizontal scanning circuit 111 and is a pulse which is input every row. For a period of time during which the external signal pAF1 is at the high level, the counter circuit counts the pulses PHST and outputs the high-level signal to the terminal pAF on every fifth row (jth row, (j+4)th row, ...). Thus, the signal from the focus detecting pixel and the signal from the imaging pixel can be read out at the different gains. Although the counting operation is executed by the start pulse of the horizontal scanning circuit 111 in the embodiment, the invention is not limited to the start pulse but any pulse which is input every row may be used. Although an nMOS switch and a CMOS switch have been used in the above description, the invention is not limited to them.

(Second Embodiment)

The second embodiment relates to a case where, since the focus detecting pixel is constructed by a pixel (W pixel) which has not a filter removing light of a specific wave-length, the focus detecting pixel has a higher sensitivity rather than that of the imaging pixel. The imaging pixel has a color filter and the focus detecting pixel does not have any color filter. It is now assumed that the color filter selectively transmits the light of a predetermined wave-length band. On the other hand, the focus detecting pixel has such a construction that it does not have a wave-length selectivity like a color filter or has a wave-length selectivity lower than that of the color filter. In this case, the output signal of the focus detecting pixel can be larger than that of the imaging pixel. On the other hand, according to the construction of the embodiment, such a situation that the output signal of the focus detecting pixel is saturated can be suppressed. For this purpose, the gain of the read out circuit 110 of the column including the focus detecting pixels is set so as to be smaller than the gain of the read out circuit 110 of the column including only the imaging pixels. As a read out circuit of the column including the focus detecting pixels, the same circuit as that in FIG. 5 can be used.

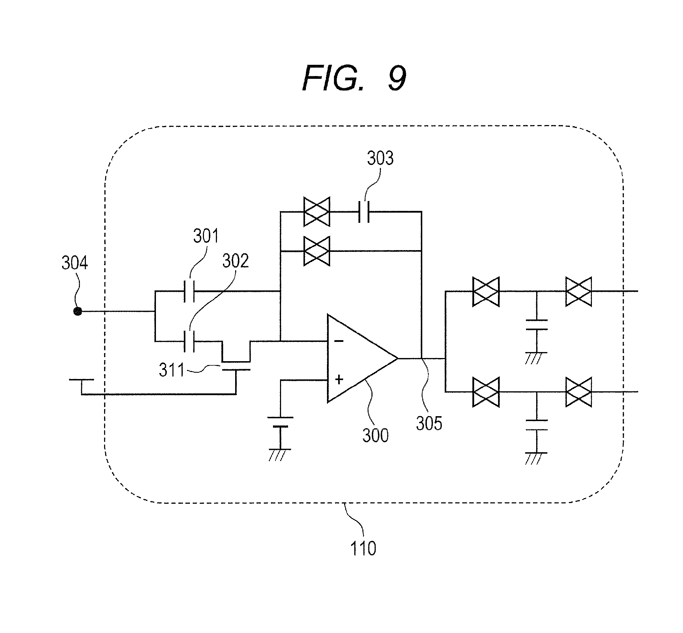

FIG. 9 is a diagram illustrating an example of a construction of the read out circuit 110 of the column in which no focus detecting pixels are arranged. A different point between the read out circuit 110 of FIG. 9 and the read out circuit 110 of FIG. 6 will now be described hereinbelow. In FIG. 9, the MOS transistor 311 can be turned on. Thus, the input capacitor 302 can be always added as a capacitor. The amplitude of the signal at the output terminal 305 is equal to ΔV × (C1 + C2)/C3. That is, the column amplifier (amplifying unit) 300 amplifies the signal of the imaging pixel at the first gain of (C1 + C2)/C3. The column amplifier (amplifying unit) 300 in the read out circuit 110 of FIG. 5 amplifies the signal from the imaging pixel at the first gain of (C1 + C2)/C3 and amplifies the signal from the focus detecting pixel at the second gain of C1/C3. The second gain is smaller than the first gain.

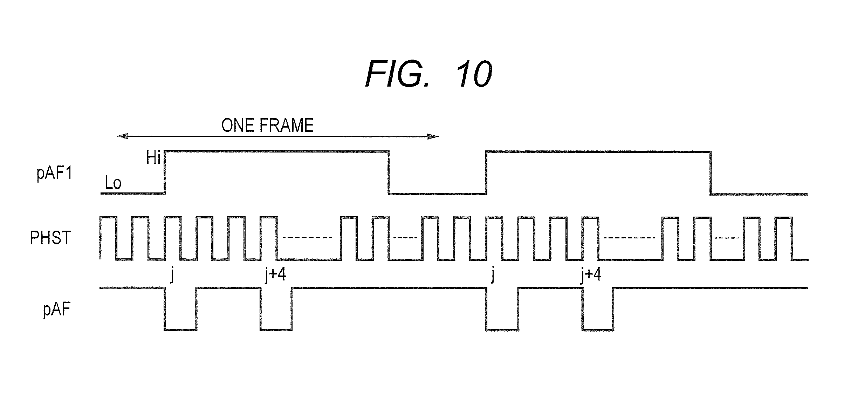

FIG. 10 is a driving timing chart of the read out circuits 110 of FIGS. 5 and 9. In the read out circuit 110 of the column including the focus detecting pixels, the low-level signal is input to the terminal pAF in FIG. 5 at timing for reading out the row including the focus detecting pixels and the signal from the focus detecting pixel is read out at the gain smaller than that of the imaging pixels. For a period of time during which the external signal pAF1 is at the high level, the counter circuit counts the pulses PHST, so that it can generate the signal of the terminal pAF. In the case where the focus detecting pixel is the W pixel, by setting the second gain of the signal from the focus detecting pixel so as to be smaller than the first gain of the signal from the imaging pixel, the saturation of the output signal from the focus detecting pixel can be suppressed.

(Third Embodiment)

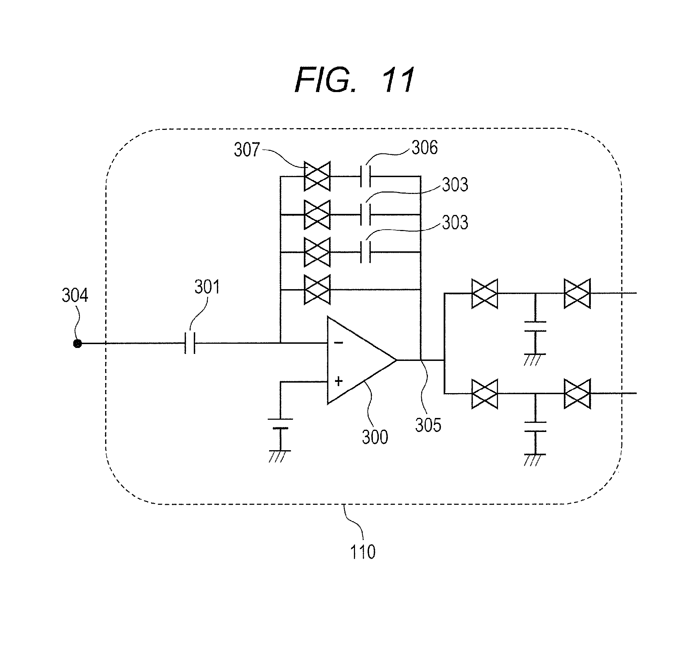

FIG. 11 is a diagram illustrating an example of a construction of the read out circuit 110 of each column of a solid-state imaging apparatus in the third embodiment.
FIG. 11 illustrates a construction using a feedback capacitor 306 and a switch 307 for the feedback capacitor 306. In a manner similar to the foregoing embodiments, the switch 307 for the feedback capacitor 306 can be controlled by the signal of the terminal pAF generated by the counter circuit. A gain can be decided by a ratio of the input capacitor 301 and the feedback capacitor 303 or 306. By controlling the switch 307, the gain of the signal from the focus detecting pixel and the gain of the signal from the imaging pixel can be changed. According to the embodiment, as compared with the method of switching the input capacitors in the first embodiment, the switching of the gains can be realized by adding the feedback capacitor 306 having a smaller area.

(Fourth Embodiment)

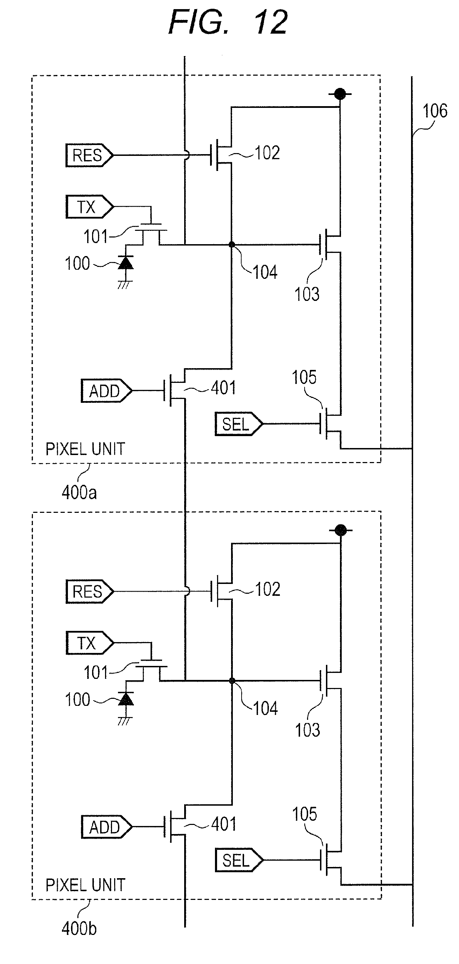

FIG. 12 is a diagram illustrating an example of a construction of pixel units of a solid-state imaging apparatus in the fourth embodiment. Pixel units 400a and 400b are illustrated. A different point between the circuit of FIG. 12 and the circuit of FIG. 1 will now be described hereinbelow. Different from FIG. 1, one photoelectric conversion element 100 is used for one amplifying MOS transistor 103. In FIG. 12, connecting switches 401 for connecting the floating diffusion regions 104 of the pixel units 400a and 400b exist between the two pixel units 400a and 400b. When a pixel signal of the pixel unit 400a is read out, by making the connecting switch 401 conductive, the floating diffusion regions 104 of the pixel units 400a and 400b are connected. Therefore, since a parasitic capacitance of the floating diffusion region 104 increases, a voltage amplitude by the signal electric charges of the photoelectric conversion element 100 of the pixel unit 400a decreases. Since the voltage amplitude is read out by the amplifying MOS transistor 103, the gain at the time of reading out decreases eventually. By making the connecting switch 401 nonconductive, the amplifying MOS transistor (amplifying unit) 103 amplifies the signal from the imaging pixel at the large first gain. By making the connecting switch 401 conductive, the amplifying MOS transistor (amplifying unit) 103 amplifies the signal from the imaging pixel at the small second gain. The second gain is smaller than the first gain. By changing the capacitors of the floating diffusion regions 104 by the connecting switches 401, the amplifying MOS transistor (amplifying unit) 103 mutually makes a difference between the first and second gains.

According to the embodiment, in order to set the second gain of the signal at the time of reading out the signal from the focus detecting pixel so as to be smaller than the first gain of the signal at the time of reading out the signal from the imaging pixel so that the signal from the focus detecting pixel becomes difficult to be saturated, the gain is reduced by making the connecting switch 401 conductive. On the contrary, the gain can be also increased in order to improve the sensitivity of the focus detecting pixel. Since the signal can be amplified at the front stage rather than that in other embodiments, the signal of a high S/N ratio can be obtained.

Although the gain is changed by connecting the floating diffusion regions 104 of the pixel units 400a and 400b by the switch 401 in this instance, the parasitic capacitances can be also changed by additionally providing a capacitor or the like. Although one amplifying MOS transistor 103 corresponds to one photoelectric conversion element 100 in the embodiment, the amplifying MOS transistor 103 may be shared by a plurality of photoelectric conversion elements 100 by controlling the connecting switches 401.

(Fifth Embodiment)

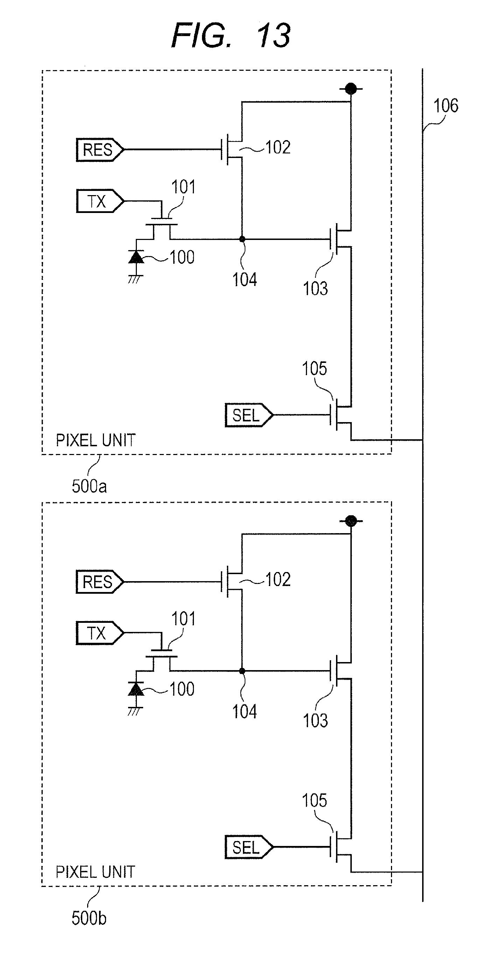

FIG. 13 is a diagram illustrating an example of a construction of pixel units of a solid-state imaging apparatus in the fifth embodiment. In the embodiment, by changing the parasitic capacitances of the floating diffusion regions 104 of pixel units 500a and 500b, the read out gains of the imaging pixel and the focus detecting pixel are changed. The fifth embodiment differs from the fourth embodiment with respect to a point that the parasitic capacitances instead of the gains of the circuits differ at the stage of layout. In FIG. 13, the pixel units 500a and 500b are illustrated. Each of the floating diffusion regions 104 of the pixel units 500a and 500b is connected to a transfer MOS transistor 101, the resetting MOS transistor 102, and the amplifying MOS transistor 103. A difference between the areas of impurity diffusion regions of sources and drains of those MOS transistors is made in their pattern layouts, thereby enabling a difference to be made between the parasitic capacitances of the floating diffusion regions 104 of the pixel units 500a and 500b. Desirably, it is better to make such a difference in the layouts of the diffusion regions of the transfer MOS transistor 101 and the resetting MOS transistor 102. Thus, since it is unnecessary to additionally provide any circuit elements in the pixel unit, a layout space can be effectively used.

(Sixth Embodiment)

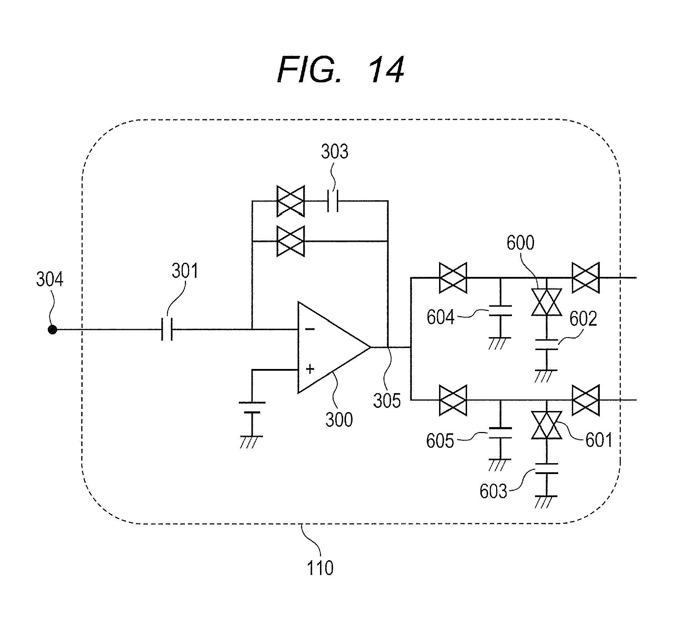

FIG. 14 is a diagram illustrating the read out circuit 110 of a solid-state imaging apparatus in the sixth embodiment. A different point between the read out circuit 110 of FIG. 14 and the read out circuit 110 of FIG. 11 will be described hereinbelow. A plurality of holding capacitors 602 to 605 hold the signals of each column of a plurality of pixels. In the sixth embodiment, gains at the time of transmitting the signals from the holding capacitors 602 to 605 of the read out circuit 110 held in each column to the horizontal transfer lines 112 (FIG. 2) are changed with respect to the imaging pixel and the focus detecting pixel. FIG. 14 illustrates the read out circuit 110 in FIG. 2 in accordance with the embodiment. Connecting switches 600 and 601 control the connection of gain changing capacitors 602 and 603. A capacitor 604 to hold a photosignal and a capacitor 605 to hold a noise signal are provided. It is assumed that capacitance values of both of the holding capacitors 604 and 605 are equal to C4, capacitance values of the gain changing capacitors 602 and 603 are equal to C5, and a parasitic capacitance of the horizontal transfer line 112 is equal to C6, respectively. Ordinarily, when the connecting switches 600 and 601 are turned off and the signals of the holding capacitors 604 and 605 are transferred to the horizontal transfer lines 112 in a capacitive division manner, a gain of C4/(C4 + C6) is applied. The signal amplitude decreases by such a gain.

By connecting the gain changing capacitors 602 and 603 by turning on the connecting switches 600 and 601, the gain at the time of the capacitive division is equal to (C4 + C5)/(C4 + C5 + C6). Thus, by controlling the connecting switches 600 and 601 in different manners by the counter circuit or the like illustrated in FIG. 8 with respect to the imaging pixel and the focus detecting pixel, the gains can be individually changed when the signals are transmitted to the horizontal transfer lines 112. The gain change is substantially the same as a change in gain of the signal. The amplifying unit by the capacitive division amplifies the signal from the imaging pixel at the first gain and amplifies the signal from the focus detecting pixel at the second gain. The horizontal transfer lines 112 sequentially transfer the signals of the holding capacitors 602 to 605 to the output amplifier 113. The amplifying unit changes the capacitance values of the holding capacitors 602 to 605 by the connecting switches 600 and 601, thereby mutually making a difference between the first and second gains.

Although the capacitive division to the horizontal transfer lines 112 has been described here, the invention is not limited to the capacitive division to the horizontal transfer lines 112 but another capacitive division with a separately-provided capacitor or the like may be used.

An output signal of the column amplifier 300 at the time when the selecting MOS transistor 105 has been turned on and the pixel unit 107 has output the signal to the vertical output line 106 in a state where the floating diffusion region 104 was reset by the turn-on of the resetting MOS transistor 102 in FIG. 1 is a noise signal. The noise signal is held in the holding capacitors 603 and/or 605. By turning on the transfer MOS transistor 101a in a state where the resetting MOS transistor 102 is OFF, the electric charges of the transfer MOS transistor 101a are transferred to the floating diffusion region 104. The output signal of the column amplifier 300 at the time when the selecting MOS transistor 105 has been turned on and the pixel unit 107 has output the signal to the vertical output line 106 in such a state is a photosignal. The photosignal is held in the holding capacitors 602 and/or 604. The noise signals of the holding capacitors 603 and/or 605 are transferred to one of the horizontal transfer lines 112 in FIG. 2. The photosignals of the holding capacitors 602 and/or 604 are transferred to the other horizontal transfer line 112 in FIG. 2. The output amplifier 113 outputs a difference between the photosignals of the two horizontal transfer lines 112 and a difference between the noise signals of the two horizontal transfer lines 112.

(Seventh Embodiment)

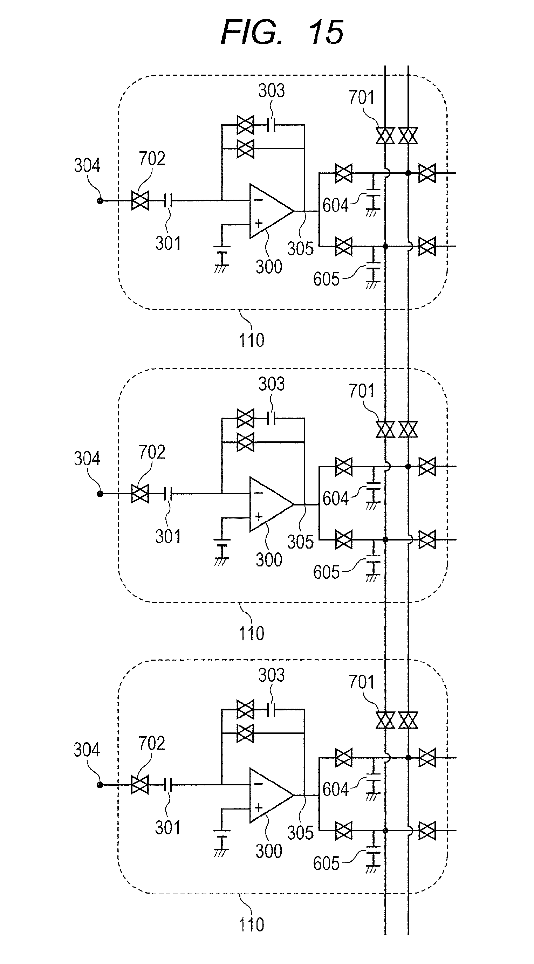

FIG. 15 is a diagram illustrating an example of a construction of the read out circuit 110 of a solid-state imaging apparatus in the seventh embodiment. A different point between the read out circuit 110 of FIG. 15 and the read out circuits 110 of FIGS. 11 and 14 will be described hereinbelow. In the seventh embodiment, in the case where a thinning-out or averaging process is executed at a period in the horizontal direction and a resultant signal is output in order to read out a moving image or the like, the gains are changed with respect to the imaging pixel and the focus detecting pixel. In the embodiment, a case where the signals of the same color are output at a 3-column period and the signals of other columns are not output will be described. FIG. 15 illustrates the read out circuits 110 of three columns. In the read out circuit 110, the holding capacitor 605 is connected to the holding capacitor 605 of the adjacent column by a connecting switch 701. A connecting switch 702 between the vertical output line 106 (FIG. 2) and the input capacitor 301 is provided. For example, in order to set the gain of the focus detecting pixel so as to be larger than the gain of the imaging pixel, by making the connecting switch 701 conductive, the adjacent holding capacitor 605 is used. On the other hand, with respect to the column in which the signal of the imaging pixel is output, the connecting switch 701 is made nonconductive. Thus, the gains at the time of the capacitive division to the horizontal transfer lines 112 (FIG. 2) can be changed with respect to the imaging pixel and the focus detecting pixel. In the case of the embodiment, the switch 702 is used and with respect to the columns which are not used, it is necessary to shut off the path before the capacitor adapted to change the gain. The amplifying unit by the capacitive division mutually makes a difference between the first gain of the imaging pixel and the second gain of the focus detecting pixel by mutually connecting the holding capacitors 604 and 605 of a plurality of adjacent columns by the connecting switches 701. Although the gains have been changed between the holding capacitor 605 and the horizontal transfer line 112 in the embodiment, another capacitive division with a separately-provided capacitor or the like may be used. Further, the gain of the column amplifier 300 itself may be raised by using the input capacitor 301 of the adjacent column amplifier 300.

(Eighth Embodiment)

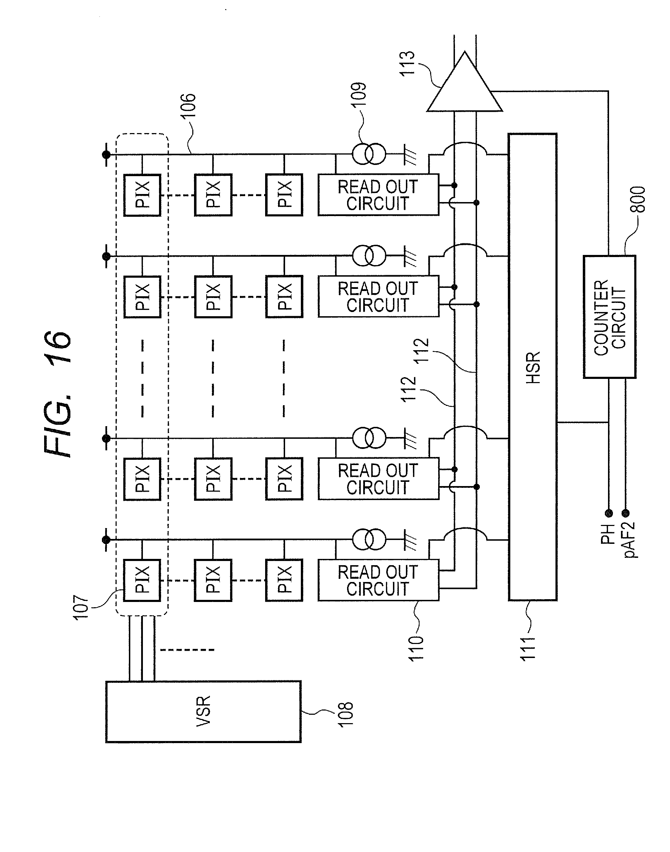

FIG. 16 is a diagram illustrating a whole construction of a solid-state imaging apparatus in the eighth embodiment. In the eighth embodiment, the output amplifier 113 amplifies the signals of the horizontal transfer lines 112 at different gains with respect to the imaging pixel and the focus detecting pixel. A horizontal scanning pulse PH is input to the horizontal scanning circuit 111 in FIG. 16. A counter circuit 800 counts the horizontal scanning pulses PH and outputs a signal to the output amplifier 113. A signal pAF2 is a signal which is transferred from the counter circuit in the vertical direction at the same timing as that in FIG. 8.

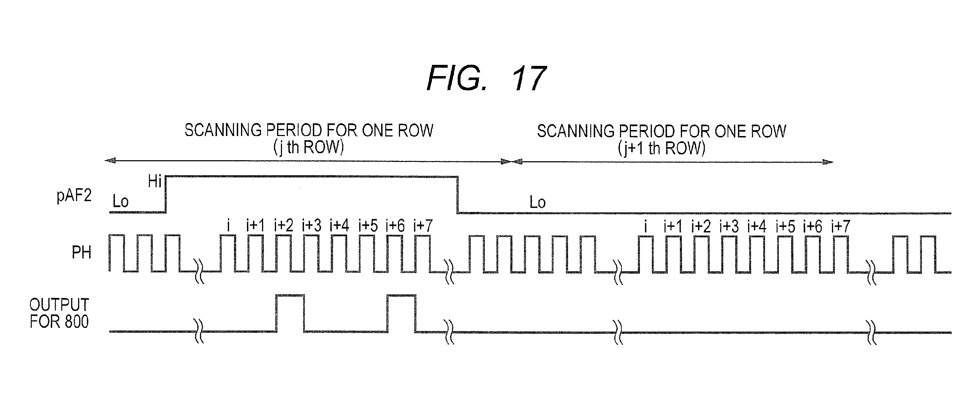

FIG. 17 is a diagram illustrating an output of the counter circuit 800. It is assumed that a pixel layout is the same as that in FIG. 4. At the jth row in which the focus detecting pixels exist, the signal pAF2 is set to the high level. At this time, the counter circuit 800 counts the horizontal scanning pulses PH and outputs the high-level pulse to the output amplifier 113 at the (i+2)th column and the (i+6)th column. At the (j+1)th row having only the imaging pixels, the signal pAF2 is set to the low level and the counter circuit 800 does not output the high-level pulse to the output amplifier 113 at both of the (i+2)th column and the (i+6)th column. The output amplifier (amplifying unit) 113 can change the gains with respect to the imaging pixel and the focus detecting pixel in accordance with the output of the counter circuit 800. The output amplifier 113 amplifies the signals of the horizontal transfer lines 112 at the first gain of the imaging pixel or at the second gain of the focus detecting pixel.

When an aperture ratio of the focus detecting pixel is smaller than that of the imaging pixel, the signal of the focus detecting pixel is smaller than that of the imaging pixel. In this case, it is sufficient to set the gain of the signal from the focus detecting pixel so as to be larger than that of the imaging pixel. Thus, even in the case of an image of a small contrast, a high S/N ratio can be obtained in the signal from the focus detecting pixel.

In order to improve the sensitivity of the focus detecting pixel, a method whereby no color filters are arranged on the focus detecting pixels but the focus detecting pixels are covered with only a transparent resin is considered. By this method, the sensitivity of the focus detecting pixel is increased to a value which is 2 or 3 times as high as that in the case where the focus detecting pixels have the color filters. However, in this case, such a problem that the sensitivity is excessively raised and if the strong photosignal entered, the photodiode for the photoelectric conversion is saturated occurs. In such a case, it is sufficient to set the gain of the signal from the focus detecting pixel so as to be smaller than that of the imaging pixel. Thus, the saturation of the signal from the focus detecting pixel can be prevented.

Since the signal from the imaging pixel and the signal from the focus detecting pixel can be amplified at the different gains, the solid-state imaging apparatus in which the signal of the high S/N ratio can be obtained, it is difficult to be influenced by various photographing conditions, and the auto-focusing operation can be performed can be provided.

The foregoing embodiments are nothing but the embodying examples and the technical scope of the invention should not be limitatively interpreted. That is, various modifications of the invention can be embodied without departing from its technical idea or its principal features. Particularly, the examples of changing the gains shown in the foregoing embodiments may be independently used or can be also used in combination.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.
A solid-state imaging apparatus has a plurality of pixels and an amplifying unit (300) for amplifying signals of the plurality of pixels. The plurality of pixels have imaging pixels and focus detecting pixels. The amplifying unit amplifies the signals of the imaging pixels at a first gain and amplifies the signals of the focus detecting pixels at a second gain different from the first gain.

## Claims

1. A solid-state imaging apparatus comprising:
a plurality of pixels; and
an amplifying unit for amplifying a signal from of the plurality of pixels, wherein
the plurality of pixels include an imaging pixel and a focus detecting pixel, and
the amplifying unit amplifies at a first gain a signal from the imaging pixel, and amplifies a signal from the focus detecting pixel at a second gain different from the first gain.

2. The solid-state imaging apparatus according to claim 1, wherein
the second gain is larger than the first gain.

3. The solid-state imaging apparatus according to claim 1, wherein
the imaging pixel has a color filter, the focus detecting pixel has a smaller wave-length selectivity rather than that of the color filter, and
the second gain is smaller than the first gain.

4. The solid-state imaging apparatus according to any one of claims 1 to 3, wherein
the plurality of pixels are arranged in a matrix, and the amplifying unit includes amplifying circuits each corresponding to each of the columns of the plurality of pixels.

5. The solid-state imaging apparatus according to any one of clams 1 to 4, wherein
the pixel has a floating diffusion region for converting a charge generated by a photoelectric conversion into a voltage, and
the amplifying unit makes a difference between the first and second gains, by changing a capacitance of the floating diffusion region.

6. The solid-state imaging apparatus according to any one of claims 1 to 5, wherein
the plurality of pixels are arranged in a matrix, and the solid-state imaging apparatus further comprises
a plurality of holding capacitors each for holding the signal of the each column of the plurality of pixels, and
a transfer line for transferring, in capacitive division, a charge held by each of holding capacitors, and wherein
the amplifying unit makes a difference between the first and second gains, by changing a capacitance value of the holding capacitor.

7. The solid-state imaging apparatus according to claim 6, wherein
the amplifying unit makes a difference between the first and second gains, by connecting mutually the holding capacitors of the plurality of columns.

8. The solid-state imaging apparatus according to any one of claims 1 to 7, wherein
the plurality of pixels are arranged in a matrix, and the solid-state imaging apparatus further comprises
a plurality of holding capacitors each for holding the signal of the each column of the plurality of pixels, and
a transfer line for transferring, in capacitive division, successively a charge held by each of holding capacitors, and wherein
the amplifying unit amplifies the signal from the transfer line at the first or second gain.
